# EUROPÄISCHE PATENTSCHRIFT

(11) **EP 4 139 639 B1**
(45) Veröffentlichungstag und Bekanntmachung des Hinweises auf die Patenterteilung: **13.11.2024**
(21) Anmeldenummer: 21719864.7
(22) Anmeldetag: 08.04.2021
(51) Int. Cl.: G01G 7/04, G01G 21/16

(54) **WÄGESYSTEM**
WEIGHING SYSTEM
SYSTÈME DE MESURE DE POIDS

(30) Priorität: 22.04.2020 DE 102020110919
(43) Veröffentlichungstag der Anmeldung: 01.03.2023
(73) Patentinhaber: Sartorius Lab Instruments GmbH & Co. KG, 37079 Göttingen (DE)
(72) Erfinder: KUHLMANN, Otto, 37120 Bovenden (DE)
(74) Vertreter: Novagraaf International SA
(86) Internationale Anmeldenummer: PCT/EP2021/059200
(87) Internationale Veröffentlichungsnummer: WO 2021/213809

(56) Entgegenhaltungen:
- EP-A1- 2 434 264
- DE-U1- 29 613 668

## Beschreibung

### Gebiet der Erfindung

Die Erfindung bezieht sich auf ein Wägesystem, umfassend
- eine Basis mit einer vertikal erstreckten Basisrückwand und einem Basisboden, der horizontal nach vorn vone der Basisrückwand abragt,
- eine horizontale Parallellenkeranordnung mit als horizontal erstreckte Materialdünnstellen ausgebildeten, hinteren Gelenken und mit ebenfalls als horizontal erstreckte Materialdünnstellen ausgebildeten, vorderen Gelenken,
- einen über besagte Parallellenkeranordnung an der Basis angelenkten Lastaufnehmer, wobei die Parallellenkeranordnung in einer hinteren Anlenkungsebene mittels besagter hinterer Gelenke an der Basisrückwand und in einer vorderen Anlenkungsebene mittels besagter vorderer Gelenke an dem Lastaufnehmer angelenkt ist, und
- ein als vertikal ausgerichtete Materialdünnstelle ausgebildetes Hebellager,
- einen horizontal erstreckten Übersetzungshebel mit einem vorderen, kurzen Hebelarm und einem hinteren, langen Hebelarm, wobei der Übersetzungshebel mittels besagten Hebellagers, welches einerseits zwischen den Hebelarmen an dem Übersetzungshebel und andererseits am Basisboden ansetzt, an der Basis gelagert ist,
- ein vertikal erstrecktes Koppelband, wobei auf den Lastaufnehmer wirkende Gewichtskräfte, umgelenkt über besagtes Koppelband, als Zugkräfte in den kurzen Hebelarm einleitbar sind und
wobei von dem Lastaufnehmer ein Kragarm nach vorne abragt, der an seinem hinteren Ende starr mit dem Lastaufnehmer verbunden ist und der an seinem vorderen Ende eine mechanische Schnittstelle zur Fixierung eines Wägegutträgers aufweist,

### Stand der Technik

Ein derartiges Wägesystem ist bekannt aus der DE 296 13 668 U1.

Wägesysteme als Herzstück moderner Präzisionswaagen, die insbesondere nach dem Prinzip der elektromagnetischen Kompensation arbeiten, sind dem Fachmann hinlänglich bekannt. Derartige Wägesysteme können monolithisch ausgebildet oder aus mehreren Teilen zusammengebaut sein.

Bei einer ein solches Wägesystem enthaltenden Waage wird das zu wägende Wägegut auf einen Wägegutträger aufgelegt, der mit dem sogenannten Lastaufnehmer verbunden ist. Der Wägegutträger ist üblicherweise ein eigenständiges Bauelement, das meist lösbar mit dem Lastaufnehmer verbunden ist. Der Lastaufnehmer ist hingegen Bestandteil des Wägesystems, dessen funktionsrelevante Bestandteile bei monolithischen Systemen einstückig miteinander verbunden sind. Der Lastaufnehmer ist über eine Parallellenkeranordnung an einer feststehenden Basis angelenkt und daher durch die auf ihn einwirkende Gewichtskraft gegenüber der Basis in vertikaler Richtung (geringfügig) ausgelenkbar. Diese nach unten gerichtete Gewichtskraft wird über ein gelenkiges sogenanntes Koppelband in eine Zugkraft umgelenkt, die am freien Ende des kurzen Hebelarmes eines Übersetzungshebels angreift. Der Übersetzungshebel weist weiter einen langen Hebelarm auf, wobei die Abgrenzung zwischen langem und kurzem Hebelarm des üblicherweise balkenförmig ausgebildeten Übersetzungshebels durch die Position eines vertikal orientierten Hebelgelenks definiert ist, um welches der Übersetzungshebel schwenkbar ist. Über dieses Hebelgelenk ist der Übersetzungshebel an der Basis, insbesondere an einem Basisboden, angelenkt. Es kann sich dabei um eine stehende oder eine hängende Anordnung des Übersetzungshebels handeln. Bei der stehenden Anordnung erstreckt sich das Hebellager vom Basisboden vertikal nach oben. Bei einer derartigen Ausführungsform kann der Basisboden die unterste Lage des Wägesystems, insbesondere dessen Auflagefläche bilden. Bei der hängenden Anordnung stellt der Basisboden eine Art Zwischenboden dar, unter dem Raum für das sich vom Basisboden nach unten erstreckende Hebellager und den Übersetzungshebel ist. Der lange Hebelarm weist eine Halterung für den beweglichen Teil einer Tauchspulenanordnung auf, die aus einem beweglichen Teil (Permanentmagnet oder elektrische Spule) und einem an der Basis fixierten, feststehenden Teil (entsprechend elektrische Spule oder Permanentmagnet) besteht. Am freien Ende des langen Hebelarms ist üblicherweise eine Visiereinrichtung angeordnet, die mit einer basisfesten, optischen Positionsmesseinrichtung wechselwirkt. Über eine Detektion des durch diese Wechselwirkung hervorgerufenen optischen Signals kann die exakte Lage des Übersetzungshebels hochpräzise erfasst und zur Regelung eines Kompensationsstroms durch die Tauchspulenanordnung genutzt werden, die jeder den Übersetzungshebel auslenkenden Gewichtskraft eine kompensatorische elektromagnetische Kraft entgegensetzt. Der hierzu eingeregelte Kompensationsstrom ist zugleich der für die von dem Wägegut eingebrachte Gewichtskraft repräsentative Messstrom.

Der Fachmann erkennt, dass das Auflösungsvermögen der Waage wesentlich von dem Auflösungsvermögen, mit dem die Hebellage detektiert werden kann, abhängt. Die gängigen Systeme reizen die hier Einsatz findenden optischen Möglichkeiten, deren Details im Rahmen der vorliegenden Erfindung nicht von Bedeutung sind, weitestgehend aus. Gleichwohl wäre für hochpräzise Anwendungsfälle eine Verbesserung des Auflösungsvermögens wünschenswert.

Die DE 44 27 087 A1 zeigt ein typisches, monolithisches Wägesystem der oben beschriebenen Art, speziell in einer Ausführungsform mit hängender Lagerung des Übersetzungshebels.

Aus der EP 2 860 501 A1 ist eine sogenannte Kragarmwaage bekannt, wobei die Druckschrift kaum Einzelheiten zum Aufbau des dortigen Wägesystems offenbart. Derartige Waagen zeichnen sich dadurch aus, dass der Wägegutträger nicht unmittelbar und zentral auf dem Lastaufnehmer positioniert ist, sondern am freien Ende eines starr mit dem Lastaufnehmer verbundenen sogenannten Kragarms. Diese Gestaltung findet häufig bei hochbauenden Wägesystemen Einsatz. Bei flachbauenden Systemen ist die Bestückung eines über dem Lastaufnehmer angeordneten Wägegutträgers aus ergonomischen Gründen ohne weiteres vertretbar. Bei hochbauenden Systemen, bei denen der Wägegutträger entsprechend hoch angeordnet wäre, leidet die Bedienungsergonomie. Mittels besagten Kragarms ist es jedoch möglich, den Wägegutträger benachbart zu, insbesondere vor dem hochbauenden Teil des Wägesystems zu positionieren und so die gleiche, gute Ergonomie wie bei einem flachbauenden System zu erzielen.

Die vorgenannte EP 2 860 501 A1 offenbart zwar keine Hebelübersetzung der über den Kragarm auf den Lastaufnehmer eingeleiteten Gewichtskraft und ist daher für Präzisionswägungen nicht geeignet. Hinsichtlich der grundsätzlichen Funktionsweise des Wägesystems und insbesondere im Hinblick auf die oben angesprochene Auflösungsproblematik bei hebelübersetzten Waagen hat die Gestaltung mit oder ohne Kragarm bei den bekannten Systemen jedoch keinerlei Einfluss. So offenbart die DE 21 2009 000 148 U1 eine flachbauende, hebelübersetzte Kragarmwaage, deren nach hinten vom Lastaufnehmer abragender Kragarm genutzt wird, um die Längenabmessungen der Waage insgesamt zu reduzieren: Der Wägegutträger kann so über dem Zentrum des Wägesystems positioniert werden, welches er dann seitlich nicht überragt, sodass allein die Abmessungen des Wägesystems die Stellfläche der Waage insgesamt bestimmen. Das Auflösungsvermögen dieser Waage unterscheidet sich nicht von dem einer (hypothetischen) Waage mit unmittelbar am Lastaufnehmer angeordnetem Wägegutträger (ohne Kragarm) und im Übrigen gleichem Aufbau, d.h. im Wesentlichen von dem einer Waage gemäß der zuvor bereits genannten DE 44 27 087 A1. Auch die EP 2 434 264 A1 offenbart eine flachbauende Waage ohne Kragarm.

Im Rahmen der hiesigen Beschreibung soll die durch die Gravitation vorgegebene Ausrichtung des Wägesystems in einer betriebsbereiten Waage als Referenz für die Bedeutung relativer Richtungsbegrifflichkeiten wie "oben" und "unten" dienen. Für Richtungsbegrifflichkeiten wie "hinten" und "vorne" soll insbesondere die Erstreckung der Parallellenkeranordnung von "hinten", d.h. von der Basisrückwand, nach "vorne", d.h. in Richtung auf den Lastaufnehmer zu, als Referenz dienen.

### Aufgabenstellung

Es ist die Aufgabe der vorliegenden Erfindung, ein gattungsgemäßes Wägesystem derart weiterzubilden, dass ein besseres Auflösungsvermögen der Hebellagendetektion ermöglicht wird.

### Darlegung der Erfindung

Diese Aufgabe wird in Verbindung mit den Merkmalen des Oberbegriffs von Anspruch 1 dadurch gelöst, dass das Hebellager vor dem Lastaufnehmer im Bereich unterhalb des Kragarms angeordnet ist.

Bevorzugte Ausführungsformen der Erfindung sind Gegenstand der abhängigen Ansprüche.

Der Kerngedanke der Erfindung liegt in der Verlängerung des langen Hebelarms des Übersetzungshebels. Je länger dieser Hebelarm ist, desto größer ist, bei gegebener Auslenkung des kurzen Hebelarms, die Auslenkung der Visiereinrichtung an seinem freien Ende. Entsprechend leichter bzw. mit entsprechend höherer Auflösung ist diese Auslenkung dann von der Positionsmesseinrichtung detektierbar. Beim gattungsgemäßen Wägesystem liegt das Hebellager hinter der vorderen Anlenkungsebene der Parallellenkeranordnung. Die mögliche Länge des langen Hebelarms ist entsprechend beschränkt. Die Erfindung sieht demgegenüber eine Vorverlagerung des Hebelgelenks in den Bereich vor dem Lastaufnehmer vor. Es ist dies der Bereich des Kragarms, auf den bei einer solch erfindungsgemäßen Vorverlagerung des Hebelgelenks - unabhängig davon, ob das Wägesystem im Übrigen ein hoch- oder flachbauendes System ist - nicht verzichtet werden kann. Das Hebelgelenk wird also erfindungsgemäß unter den nach vorne abragenden Kragarm verlegt, wo hinreichend Bauraum dafür zur Verfügung steht. An der Dimensionierung und Ankopplung des kurzen Hebelarms muss sich dabei gegenüber dem Stand der Technik nichts ändern. Die Vorverlagerung des Hebelarms kann vielmehr vollständig für eine Verlängerung des langen Hebelarms und daher zur oben erläuterten Verbesserung der Positionsdetektionsauflösung genutzt werden.

Ein besonderer Charme der Erfindung liegt gerade darin, dass, abgesehen von der Verlängerung des langen Hebelarms, kaum Veränderungen an bewährten Strukturen vorgenommen werden müssen. So ist besonders bevorzugt vorgesehen, dass auch das Koppelband, welches üblicherweise vor dem Hebelgelenk liegt, nun ebenfalls vor dem Lastaufnehmer im Bereich des Kragarms angeordnet ist. Es kann daher seine funktional begründete Relativposition zum kurzen Hebelarm unverändert beibehalten.

Das Hebellager kann sich vom Basisboden vertikal nach oben erstrecken. Dies entspricht einer stehenden Anordnung des Hebellagers. Alternativ ist es jedoch auch möglich, dass sich das Hebellager vom Basisboden vertikal nach unten erstreckt, was einer hängenden Anordnung entspricht.

In der nachfolgenden, speziellen Beschreibung wird die Erfindung an Ausführungsformen weiter diskutiert, in denen die einzelnen Elemente wie Parallellenkeranordnung, Basisboden, Koppelwand, Kragarm und Übersetzungshebel horizontal und/oder vertikal deutlich voneinander getrennt angeordnet sind. Die Diskussion anhand solcher Ausführungsformen dient in erster Linie der besseren Verständlichkeit. In der Praxis wünscht der Fachmann jedoch typischerweise möglichst flachbauende Systeme, sodass bei einer bevorzugten Weiterbildung der Erfindung vorgesehen ist, dass die Parallellenkeranordnung, der Basisboden, das Koppelband, der Kragarm und/oder der Übersetzungshebel in vertikaler Richtung miteinander verschachtelt sind. Dies kann insbesondere die lateral geteilte Ausführung eines oder mehrerer der vorgenannten Elemente einschließen. Die lateral geteilte Ausführung ist dem Fachmann grundsätzlich bekannt. Beispielsweise offenbart die gattungsbildende Druckschrift eine geteilte Ausbildung der Parallellenkeranordnung und des Hebelgelenks.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer Waage mit erfindungsgemäßem Wägesystem mit hängender Hebellagerung sowie
- Figur 2:: eine schematische Darstellung einer Waage mit erfindungsgemäßem Wägesystem mit stehender Hebellagerung.

### Beschreibung bevorzugter Ausführungsformen

Gleiche Bezugszeichen in den Figuren deuten auf gleiche oder analoge Elemente hin.

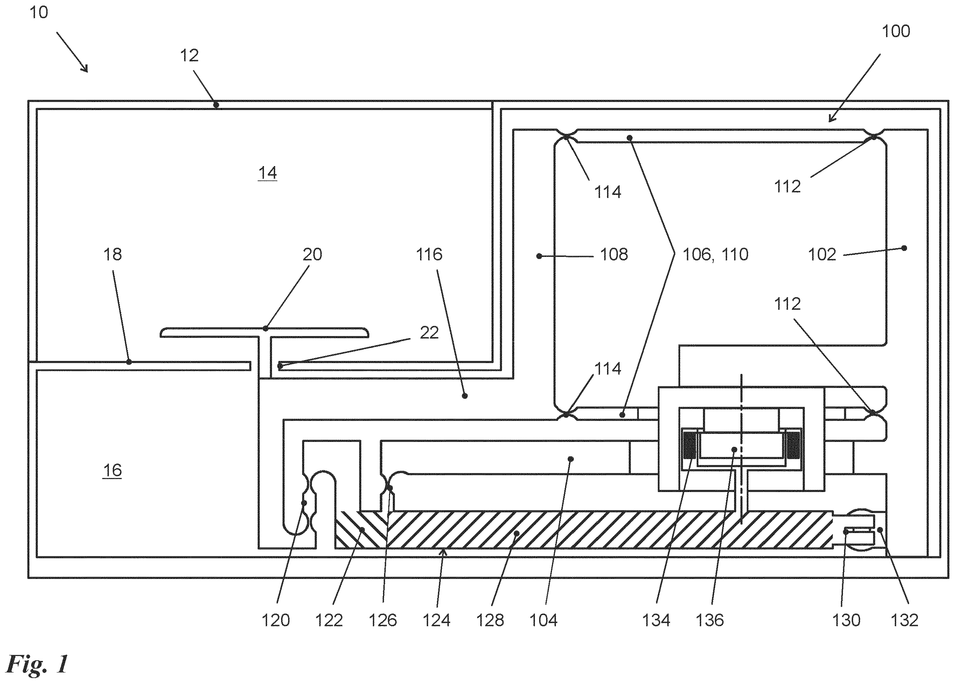

Figur 1 zeigt in schematisierter Darstellung eine Waage 10 mit erfindungsgemäßem Wägesystem 100 in einer Ausführungsform mit hängender Hebellagerung. Die Schematisierung in Figur 1 betrifft im Wesentlichen die dargestellte, vertikal isolierte Anordnung der einzelnen, nachfolgend näher zu beschreibenden Bestandteile. Bei tatsächlichen, praktischen Ausführungsformen ist eine vertikale Verschachtelung durchaus möglich und sogar erwünscht, um ein insgesamt flacher bauendes System zu realisieren. Die schematisierte Darstellung erfolgt allein aus Gründen der besseren Verständlichkeit.

Die Waage 10 umfasst ein Gehäuse 12, welches sich in einen Wägeraum 14 und einen Systemraum 16 gliedert ist. Der Systemraum 16 erstreckt sich neben (rechts in Figur 1) sowie unterhalb des Wägeraums 14. Eine Verbindung zwischen Wäge- und Systemraum 16 besteht im zentralen Bereich des Wägeraumbodens 18, der eine von einem Wägegutträger 20 durchsetzte Öffnung 22 aufweist.

Im Wägesystemraum 16 ist ein Wägesystem 100 angeordnet. Dieses umfasst eine Basis mit einer Basisrückwand 102 und einem Basisboden 104, der als Zwischenboden ausgebildet ist und beabstandet vom Fuß der sich vertikal erstreckenden Basisrückwand in horizontaler Richtung nach vorne (links in Figur 1) abragt. Indirekt über eine Parallellenkeranordnung 106 ist ein Lastaufnehmer 108 an der Basisrückwand 102 angelenkt. Die Parallellenkeranordnung 106 umfasst zwei horizontal verlaufende, vertikal voneinander beabstandete Lenker 110, die jeweils hinten mit einem hinteren Gelenk 112 an der Basisrückwand und vorne jeweils mit einem vorderen Gelenk 114 am Lastaufnehmer 108 angelenkt sind. Die Gelenke 112, 114 sind als horizontal erstreckte Materialdünnstellen ausgebildet. Üblicherweise ist die Parallellenkeranordnung 110 lateral geteilt.

Nach vorne erstreckt sich vom Lastaufnehmer 108 ein starr mit diesem verbundener Kragarm 116, auf dessen vorderem, freien Ende der Wägegutträger 20 fixiert ist. Eine Belastung des Wägegutträgers 20 mit einem Wägegut führt daher zu einer geringfügigen, vertikalen Auslenkung des Lastaufnehmers 108 und des Kragarms 116 relativ zur feststehenden Basisrückwand 102. Über das Koppelband 120 wird die diese Auslenkung hervorrufende Gewichtskraft auf den kurzen Hebelarm 122 des Übersetzungshebels 124 geleitet, der dadurch nach unten gezogen wird. Der Übersetzungshebel 124 ist mittels des Hebelgelenks 126 am Basisboden 104 hängend angelenkt. Entsprechend führt der lange Hebelarm 128 des Übersetzungshebels 124 eine Aufwärtsbewegung aus. Hierdurch verändert die schlitzförmige Visiereinrichtung ihre Position relativ zur basisfesten, optischen Positionsmesseinrichtung, was diese detektiert und an eine nicht dargestellte Steuereinrichtung weiterleitet. Die Steuereinrichtung generiert einen Kompensationsstrom durch eine vom langen Hebelarm 128 getragene Spule 134, die einen basisfesten Permanentmagneten 136 umläuft. Hierdurch wird eine Rückstellkraft erzeugt, die den Übersetzungshebel in seine Nulllage rücküberführt, was wiederum von der Positionsmesseinrichtung 132 in Wechselwirkung mit der Visiereinrichtung 130 detektiert wird. Der für eine exakte Rückstellung erforderliche Kompensationsstrom wird von der Steuereinrichtung als Maß für die erforderliche Kompensationskraft und damit als Maß für die auf den Wägegutträger wirkende Gewichtskraft interpretiert.

Man erkennt, dass das Hebelgelenk 126 und damit der kurze Hebelarm 122 und das Koppelband 120 deutlich vor (links in Fig. 1) dem Lastaufnehmer 108 und unterhalb des Kragarms 116 angeordnet ist. Der dadurch gewonnene Raum wird zur Verlängerung des langen Hebelarms 128 genutzt, was - bei gegebener Auslenkung des kurzen Hebelarms 122 - zu einer Vergrößerung des Ausschlags des langen Hebelarms 128 und damit zu einer Auflösungsverbesserung bei der Detektion der Position der Visiereinrichtung 130 durch die Positionsmesseinrichtung 132 führt.

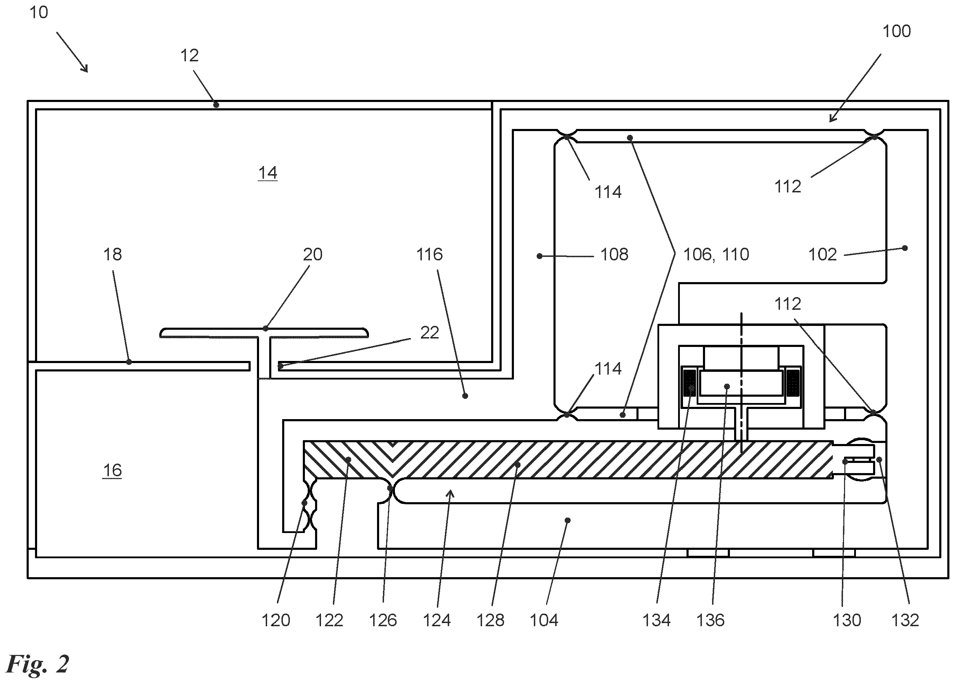

Figur 2 zeigt eine ähnliche Waage, allerdings mit stehender Lagerung des Übersetzungshebels 124. Davon abgesehen kann vollumfänglich auf die Erläuterung zu Figur 1 verwiesen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Waage
- 12: Gehäuse
- 14: Wägeraum
- 16: Wägesystemraum
- 18: Wägeraumboden
- 20: Wägegutträger
- 22: Öffnung
- 100: Wägesystem
- 102: Basisrückwand
- 104: Basisboden
- 106: Parallellenkeranordnung
- 108: Lastaufnehmer
- 110: Lenker
- 112: hintere Gelenke
- 114: vordere Gelenke
- 116: Kragarm
- 120: Koppelband
- 122: kurzer Hebelarm
- 124: Übersetzungshebel
- 126: Hebelgelenk
- 128: langer Hebelarm
- 130: Visiereinrichtung
- 132: Positionsmesseinrichtung
- 134: Spule
- 136: Permanentmagnet

## Patentansprüche

1. Wägesystem (100), umfassend
- eine Basis mit einer vertikal erstreckten Basisrückwand (102) und einem Basisboden (104), der horizontal nach vorne von der Basisrückwand (102) abragt,
- eine horizontale Parallellenkeranordnung (106) mit als horizontal erstreckte Materialdünnstellen ausgebildeten, hinteren Gelenken (112) und mit ebenfalls als horizontal erstreckte Materialdünnstellen ausgebildeten, vorderen Gelenken (114),
- einen über besagte Parallellenkeranordnung (106) an der Basis angelenkten Lastaufnehmer (108), wobei die Parallellenkeranordnung (106) in einer hinteren Anlenkungsebene mittels besagter hinterer Gelenke (112) an der Basisrückwand (102) und in einer vorderen Anlenkungsebene mittels besagter vorderer Gelenke (114) an dem Lastaufnehmer (108) angelenkt ist,
- ein als vertikal ausgerichtete Materialdünnstelle ausgebildetes Hebellager (126),
- einen horizontal erstreckten Übersetzungshebel (124) mit einem vorderen, kurzen Hebelarm (122) und einem hinteren, langen Hebelarm (128), wobei der Übersetzungshebel (124) mittels besagten Hebellagers (126), welches einerseits zwischen den Hebelarmen (122, 128) an dem Übersetzungshebel (124) und andererseits am Basisboden (104) ansetzt, an der Basis gelagert ist, und
- ein vertikal erstrecktes Koppelband (120), wobei auf den Lastaufnehmer (108) wirkende Gewichtskräfte, umgelenkt über besagtes Koppelband (120), als Zugkräfte in den kurzen Hebelarm (122) einleitbar sind und
wobei von dem Lastaufnehmer (108) ein Kragarm (116) nach vorne abragt, der an seinem hinteren Ende starr mit dem Lastaufnehmer (108) verbunden ist und der an seinem vorderen Ende eine mechanische Schnittstelle zur Fixierung eines Wägegutträgers (20) aufweist,
**dadurch gekennzeichnet,**
**dass** das Hebellager (126) vor dem Lastaufnehmer (108) im Bereich unterhalb des Kragarms (116) angeordnet ist.

2. Wägesystem (100) nach Anspruch 1,
**dadurch gekennzeichnet,**
**dass** auch das Koppelband (120) vor dem Lastaufnehmer (108) im Bereich des Kragarms (116) angeordnet ist.

3. Wägesystem (100) nach einem der vorangehenden Ansprüche,
**dadurch gekennzeichnet,**
**dass** sich das Hebellager (126) vom Basisboden (104) vertikal nach oben erstreckt.

4. Wägesystem (100) nach einem der Ansprüche 1 bis 3,
**dadurch gekennzeichnet,**
**dass** sich das Hebellager (126) vom Basisboden (104) vertikal nach unten erstreckt.

5. Wägesystem (100) nach einem der vorangehenden Ansprüche,
**dadurch gekennzeichnet,**
**dass** die Parallellenkeranordnung (106), der Basisboden (104), das Koppelband (120), der Kragarm (116) und/oder der Übersetzungshebel (124) in vertikaler Richtung miteinander verschachtelt sind.

6. Wägesystem (100) nach einem der vorangehenden Ansprüche,
**dadurch gekennzeichnet,**
**dass** der lange Hebelarm (128) an seinem hinteren Ende eine mit einer basisfesten, optischen Positionsmesseinrichtung (132) wechselwirkende Visiereinrichtung (130) aufweist.

7. Wägesystem (100) nach einem der vorangehenden Ansprüche,
**dadurch gekennzeichnet,**
**dass** der lange Hebelarm (128) den beweglichen Teil einer aus einem beweglichen und einem basisfesten Teil bestehenden Tauchspulenanordnung (134, 136) trägt.

## Claims

1. Weighing system (100), comprising
- a base having a vertically extending base rear wall (102) and a base floor (104) projecting horizontally forward from the base rear wall (102),
- a horizontal parallel link assembly (106) having rear joints (112) designed as horizontally extending material thin points and front joints (114) likewise designed as horizontally extending material thin points,
- a load receiver (108) hinged to the base via said parallel link assembly (106), wherein the parallel link assembly (106) is hinged to the base rear wall (102) in a rear hinge plane by means of said rear joints (112) and is hinged to the load receiver (108) in a front hinge plane by means of said front joints (114),
- a lever bearing (126) designed as a vertically oriented material thin point,
- a horizontally extending transmission lever (124) having a front, short lever arm (122) and a rear, long lever arm (128), wherein the transmission lever (124) is mounted on the base by means of said lever bearing (126), which at one side is positioned between the lever arms (122, 128) on the transmission lever (124) and at the other side is positioned on the base floor (104), and
- a vertically extending coupling strip (120), wherein weight forces acting on the load receiver (108), which are deflected via said coupling strip (120), can be introduced into the short lever arm (122) as tensile forces, and
wherein projecting forward from the load receiver (108) is a cantilever arm (116), which at its rear end is rigidly connected to the load receiver (108) and at its front end has a mechanical interface for fixing a weighing goods support (20),
**characterized in that**
the lever bearing (126) is arranged in front of the load receiver (108) in the area below the cantilever arm (116).

2. Weighing system (100) according to claim 1,
**characterized in that**
the coupling strip (120) is also arranged in front of the load receiver (108) in the area of the cantilever arm (116).

3. Weighing system (100) according to any one of the preceding claims,
**characterized in that**
the lever bearing (126) extends vertically upward from the base floor (104).

4. Weighing system (100) according to any one of claims 1 to 3,
**characterized in that**
the lever bearing (126) extends vertically downward from the base floor (104).

5. Weighing system (100) according to any one of the preceding claims,
**characterized in that**
the parallel link assembly (106), the base floor (104), the coupling strip (120), the cantilever arm (116) and/or the transmission lever (124) are nested together in the vertical direction.

6. Weighing system (100) according to any one of the preceding claims,
**characterized in that**
the long lever arm (128) has, at its rear end, a sighting device (130) which interacts with an optical position measuring device (132) fixed to the base.

7. Weighing system (100) according to any one of the preceding claims,
**characterized in that**
the long lever arm (128) bears the movable part of a plunger coil assembly (134, 136), which consists of a movable part and a part fixed to the base.

## Revendications

1. Système de pesage (100), comprenant
- une base avec une paroi arrière de base (102) étendue verticalement et un fond de base (104) qui fait saillie horizontalement vers l'avant depuis la paroi arrière de base (102),
- un agencement à guidons parallèles (106) horizontal avec des articulations arrière (112) conçues en tant qu'emplacements minces de matériau étendus horizontalement et également avec des articulations avant (114) conçues en tant qu'emplacements minces de matériau étendus horizontalement,
- un récepteur de charge (108) articulé au niveau de la base via ledit agencement à guidons parallèles (106), dans lequel l'agencement à guidons parallèles (106) est articulé au niveau de la paroi arrière de base (102) dans un plan d'articulation arrière au moyen desdites articulations arrière (112) et au niveau du récepteur de charge (108) dans un plan d'articulation avant au moyen desdites articulations avant (114),
- un palier de levier (126) conçu en tant qu'emplacement mince de matériau orienté verticalement,
- un levier de transmission (124) étendu horizontalement avec un bras de levier court (122) avant et un bras de levier long (128) arrière, dans lequel le levier de transmission (124) est monté au niveau de la base au moyen dudit palier de levier (126), lequel s'applique d'un côté entre les bras de levier (122, 128) contre le levier de transmission (124) et d'un autre côté contre le fond de base (104), et
- une bande de couplage (120) étendue verticalement, dans lequel des forces de pesanteur agissant sur le récepteur de charge (108) peuvent être guidées en tant que forces de traction en étant déviées via ladite bande de couplage (120) jusque dans le bras de levier court (122) avant et
dans lequel un bras en porte-à-faux (116) fait saillie vers l'avant depuis le récepteur de charge (108), lequel bras en porte-à-faux est relié de façon rigide au niveau de son extrémité arrière avec le récepteur de charge (108) et présente au niveau de son extrémité avant une jonction mécanique pour la fixation d'un support de produit à peser (20),
**caractérisé en ce que**
le palier de levier (126) est agencé avant le récepteur de charge (108) dans la zone en-dessous du bras en porte-à-faux (116) .

2. Système de pesage (100) selon la revendication 1,
**caractérisé en ce que**
la bande de couplage (120) est elle aussi agencée avant le récepteur de charge (108) dans la zone du bras en porte-à-faux (116) .

3. Système de pesage (100) selon l'une des revendications précédentes,
**caractérisé en ce que**
le palier de levier (126) s'étend verticalement vers le haut depuis le fond de base (104).

4. Système de pesage (100) selon l'une des revendications 1 à 3,
**caractérisé en ce que**
le palier de levier (126) s'étend verticalement vers le bas depuis le fond de base (104).

5. Système de pesage (100) selon l'une des revendications précédentes,
**caractérisé en ce que**
l'agencement à guidons parallèles (106), le fond de base (104), la bande de couplage (120), le bras en porte-à-faux (116) et/ou le levier de transmission (124) sont emboîtés les uns dans les autres dans la direction verticale.

6. Système de pesage (100) selon l'une des revendications précédentes,
**caractérisé en ce que**
le bras de levier long (128) présente au niveau de son extrémité arrière un équipement de viseur (130) interagissant avec un équipement de mesure de position (132) optique fixé contre la base.

7. Système de pesage (100) selon l'une des revendications précédentes,
**caractérisé en ce que**
le bras de levier long (128) porte la partie mobile d'un agencement de bobines mobiles (134, 136) composé d'une partie mobile et d'une partie fixée contre la base.
